# EUROPEAN PATENT APPLICATION

(11) **EP 4 782 377 A1**
(43) Date of publication of application: **29.07.2026**
(21) Application number: 26153625.4
(22) Date of filing: 22.01.2026
(51) Int. Cl.: B65H 3/06, B65H 3/52, B65H 7/12, B65H 9/00

(54) **MEDIUM CONVEYANCE APPARATUS AND IMAGE READING APPARATUS**

(30) Priority: 22.01.2025 JP 2025009314
(71) Applicant: Seiko Epson Corporation, Tokyo 160-8801 (JP)
(72) Inventor: NISHIMURA, Yoichiro, Suwa-shi, 392-8502 (JP)
(74) Representative: Lewis Silkin LLP

(57) **Abstract**

In a medium conveyance apparatus (1), a separation section (11) includes a second torque limiter (212) that couples a first separation roller (201) and a second separation roller (202) in a width direction, a limit torque value of the second torque limiter is a second torque value smaller than a first torque value derived from a limit torque value of a first torque limiter (211), the second separation roller can co-rotate with a second feeding roller (102) when torque larger in value than the second torque value is applied, the second torque value is larger than a torque difference between torque applied to the first separation roller and torque applied to the second separation roller generated when there is no difference in rotation speed between a first feeding roller (101) and the second feeding roller, and is smaller than a torque difference between torque applied to the first separation roller and torque applied to the second separation roller generated when there is a difference in rotation speed between the first feeding roller and the second feeding roller.

## Description

The present application is based on, and claims priority from JP Application Serial Number 2025-009314, filed January 22, 2025, the disclosure of which is hereby incorporated by reference herein in its entirety.

### BACKGROUND

### 1. Technical Field

The present disclosure relates to a medium conveyance apparatus and an image reading apparatus.

### 2. Related Art

In the past, various medium conveyance apparatuses capable of feeding a medium to a conveyance section have been used. For example, JP-A-2019-116346 and JP-A-2023-87063 disclose a medium conveyance apparatus capable of feeding a medium from a feeding section to a conveyance section to convey the medium with the conveyance section.

JP-A-2019-116346 and JP-A-2023-87063 are examples of the related art.

The medium conveyance apparatus disclosed in JP-A-2019-116346 and JP-A-2023-87063 is configured to suppress skew (skew conveyance) of the medium when the medium is fed from the feeding section to the conveyance section. Specifically, the medium conveyance apparatus of JP-A-2019-116346 has a configuration capable of suppressing the skew by disposing two sensors that detect the skew of the medium, and independently rotating each of two feeding rollers. In addition, the medium conveyance apparatus disclosed in JP-A-2023-87063 has a configuration capable of suppressing the skew by two feeding rollers and two brake rollers (separation rollers) rotating independently of each other. The medium conveyance apparatus disclosed in JP-A-2023-87063 has a configuration capable of detecting the skew of the medium with a center sensor and a side sensor. However, in the related-art medium conveyance apparatus capable of feeding the medium to the conveyance section, it is difficult to improve a skew correction performance without deteriorating a medium conveyance performance.

For example, in the medium conveyance apparatus of JP-A-2019-116346, when the interval between the sensors is long, the skew of the medium narrow in width fails to be detected in some cases, and since the separation rollers facing the feeding roller rotate integrally although the two feeding rollers rotate independently, followability to each of the feeding rollers is weak, and it is difficult to correct the skew in some cases. In the medium conveyance apparatus disclosed in JP-A-2023-87063, although each of the separation rollers rotates independently, torque fluctuation in a torque limiter corresponding to each of the separation rollers may occur, and the straightness in conveyance may deteriorate (the conveyance performance may deteriorate) in some cases.

### SUMMARY

A medium conveyance apparatus according to the present disclosure for solving the problem described above includes: a feeding section configured to feed a medium downstream in a conveyance direction of the medium, the feeding section including a first feeding roller and a second feeding roller disposed at an interval in a width direction crossing the conveyance direction, and the second feeding roller rotating together with the first feeding roller; a separation section that includes a first torque limiter, that is configured to separate the medium fed in a double-feeding state in cooperation with the feeding section, that includes a first separation roller disposed so as to face the first feeding roller, and co-rotates with the first feeding roller when torque larger in value than a first torque value derived from a limit torque value of the first torque limiter is applied, and a second separation roller disposed so as to face the second feeding roller, and configured to co-rotate with the first separation roller and to rotate independently of the first separation roller; a detection section configured to detect skew of the medium fed from the feeding section; and a controller configured to rotate the first feeding roller and the second feeding roller while adjusting rotation speeds of the first feeding roller and the second feeding roller based on a state of the skew of the medium detected by the detection section, in which the first torque value is a torque value applied to the first separation roller when a limit torque value is applied to the first torque limiter, the separation section includes a second torque limiter configured to couple the first separation roller and the second separation roller to each other in the width direction, a limit torque value of the second torque limiter is a second torque value smaller than the first torque value, the second separation roller co-rotates with the second feeding roller when torque larger in value than the second torque value is applied, the second torque value is larger than a torque difference between torque applied to the first separation roller and torque applied to the second separation roller generated when there is no difference in rotation speed between the first feeding roller and the second feeding roller, and is smaller than a torque difference between torque applied to the first separation roller and torque applied to the second separation roller generated when there is a difference in rotation speed between the first feeding roller and the second feeding roller.

### BRIEF DESCRIPTION OF THE DRAWINGS

FIG. 1 is a side view of an image reading apparatus according to Example 1 of the present disclosure.
FIG. 2 is a front cross-sectional view illustrating a separation section of the image reading apparatus in FIG. 1.
FIG. 3 is a perspective view illustrating the separation section of the image reading apparatus in FIG. 1, and is a view with a part thereof see-through.
FIG. 4 is a front cross-sectional view illustrating a feeding section and the separation section of the image reading apparatus in FIG. 1.
FIG. 5 is a perspective view illustrating the feeding section and the separation section of the image reading apparatus in FIG. 1.
FIG. 6 is a diagram illustrating an arrangement of a detection section with respect to the feeding section in the image reading apparatus in FIG. 1.
FIG. 7 is a diagram illustrating an arrangement of first to third sensors out of the detection section with respect to the feeding section and a conveyance roller pair in the image reading apparatus in FIG. 1.
FIG. 8 is a diagram illustrating an arrangement of the second and third sensors out of the detection section with respect to the feeding section and the conveyance roller pair in the image reading apparatus in FIG. 1.
FIG. 9 is a diagram illustrating an arrangement of the first sensor out of the detection section with respect to the feeding section in the image reading apparatus in FIG. 1.
FIG. 10 is a front cross-sectional view illustrating a separation section of an image reading apparatus according to Example 2 of the present disclosure.
FIG. 11 is a front cross-sectional view illustrating a separation section of an image reading apparatus according to Example 3 of the present disclosure.
FIG. 12 is a front cross-sectional view illustrating a separation section of an image reading apparatus according to Example 4 of the present disclosure.

### DESCRIPTION OF EMBODIMENTS

First, an overview of the present disclosure will be described.

A medium conveyance apparatus according to a first aspect of the present disclosure for solving the problem described above includes: a feeding section configured to feed a medium downstream in a conveyance direction of the medium, the feeding section including a first feeding roller and a second feeding roller disposed at an interval in a width direction crossing the conveyance direction, and the second feeding roller rotating together with the first feeding roller; a separation section that includes a first torque limiter, that is configured to separate the medium fed in a double-feeding state in cooperation with the feeding section, that includes a first separation roller disposed so as to face the first feeding roller, and co-rotates with the first feeding roller when torque larger in value than a first torque value derived from a limit torque value of the first torque limiter is applied, and a second separation roller disposed so as to face the second feeding roller, and configured to co-rotate with the first separation roller and to rotate independently of the first separation roller; a detection section configured to detect skew of the medium fed from the feeding section; and a controller configured to rotate the first feeding roller and the second feeding roller while adjusting rotation speeds of the first feeding roller and the second feeding roller based on a state of the skew of the medium detected by the detection section, in which the first torque value is a torque value applied to the first separation roller when a limit torque value is applied to the first torque limiter, the separation section includes a second torque limiter configured to couple the first separation roller and the second separation roller to each other in the width direction, a limit torque value of the second torque limiter is a second torque value smaller than the first torque value, the second separation roller co-rotates with the second feeding roller when torque larger in value than the second torque value is applied, the second torque value is larger than a torque difference between torque applied to the first separation roller and torque applied to the second separation roller generated when there is no difference in rotation speed between the first feeding roller and the second feeding roller, and is smaller than a torque difference between torque applied to the first separation roller and torque applied to the second separation roller generated when there is a difference in rotation speed between the first feeding roller and the second feeding roller.

According to the present aspect, since the second torque value as the limit torque value of the second torque limiter is smaller than the first torque value derived from the limit torque value of the first torque limiter, it is possible to sufficiently exert the separation function of the media fed in the double-feeding state. In addition, since the second torque value is a value larger than the torque difference between the first separation roller and the second separation roller which is generated when there is no difference in rotation speed between the first feeding roller and the second feeding roller, a conveyance straightness is improved due to the binding force by the second torque value. Further, since the second torque value is a value smaller than the torque difference between the first separation roller and the second separation roller which is generated when there is a difference in rotation speed between the first feeding roller and the second feeding roller, followability of the first separation roller and the second separation roller due to the rotation of the first feeding roller and the second feeding roller is enhanced, and thus it is possible to suppress the skew. Therefore, it is possible to improve the skew correction performance without deteriorating the medium conveyance performance.

The medium conveyance apparatus according to a second aspect of the present disclosure is an aspect according to the first aspect, in which the separation section includes a differential gear that couples the first separation roller and the second separation roller to each other.

According to the present aspect, the separation section includes the differential gear that couples the first separation roller and the second separation roller to each other. By adopting such a configuration, it is possible to independently rotate the first separation roller and the second separation roller without complicating the device configuration.

The medium conveyance apparatus according to a third aspect of the present disclosure is an aspect according to the first or second aspect described above, in which in the separation section, torque limiters having limit torque values obtained by equally dividing the limit torque value of the first torque limiter are coupled respectively to the first separation roller and the second separation roller.

According to the present aspect, in the separation section, a torque limiter having a limit torque value obtained by equally dividing the limit torque value of the first torque limiter is coupled to each of the first separation roller and the second separation roller. By adopting such a configuration, it is possible to independently rotate the first separation roller and the second separation roller without complicating the device configuration.

The medium conveyance apparatus according to a fourth aspect of the present disclosure is an aspect according to any one of the first to third aspects, further including: a first driving source configured to drive the first feeding roller; and a second driving source configured to drive the second feeding roller.

According to the present aspect, the first driving source that drives the first feeding roller and the second driving source that drives the second feeding roller are provided. In this manner, by driving the first feeding roller and the second feeding roller by the individual driving sources, it is possible to easily control the skew correction.

The medium conveyance apparatus according to a fifth aspect of the present disclosure is an aspect according to any one of the first to fourth aspects, in which in the detection section, a first sensor, a second sensor, and a third sensor are disposed at intervals in the width direction, the first sensor is disposed at a position that is downstream, in the conveyance direction, of a nip position of the first feeding roller and the first separation roller and a nip position of the second feeding roller and the second separation roller, and is between the first feeding roller and the second feeding roller in the width direction, and overlaps the first feeding roller and the second feeding roller in the width direction, the second sensor is disposed at one side of the first sensor in the width direction, and the third sensor is disposed at another side of the first sensor in the width direction.

According to the present aspect, the first sensor is disposed at a position downstream, in the conveyance direction, of the nip position of the first feeding roller and the first separation roller and the nip position of the second feeding roller and the second separation roller, between the first feeding roller and the second feeding roller in the width direction, and at a position overlapping the first feeding roller and the second feeding roller in the width direction. Further, the second sensor is disposed at one side of the first sensor in the width direction, and the third sensor is disposed at the other side of the first sensor in the width direction. By adopting such a configuration, it is possible to suppress adhesion of paper dust to the first sensor and suppress a decrease in skew detection accuracy, and it is possible to advance the timing of the skew detection by the first sensor and perform the skew correction at an early stage. Therefore, it is possible to improve the skew correction performance without deteriorating the medium conveyance performance.

The medium conveyance apparatus according to a sixth aspect of the present disclosure is an aspect according to the fifth aspect described above, in which the second sensor and the third sensor are disposed at positions downstream of the first sensor in the conveyance direction.

According to the present aspect, the second sensor and the third sensor are disposed at positions downstream of the first sensor in the conveyance direction. Since such a configuration is adopted, the detection of the skew with the first sensor can be executed at an early timing, and the skew can accurately be detected by combining the detection with the second sensor and the detection with the third sensor with each other.

The medium conveyance apparatus according to a seventh aspect of the present disclosure is an aspect according to the fifth or sixth aspect, in which a distance in the width direction between the second sensor and the third sensor is narrower than a minimum available width of the medium.

According to the present aspect, the distance between the second sensor and the third sensor in the width direction is narrower than the minimum available width of the medium. By adopting such a configuration, it is possible to reliably detect the skew even when the medium having the minimum available width is skewed.

The medium conveyance apparatus according to an eighth aspect of the present disclosure is an aspect according to any one of the fifth to seventh aspects, further including a conveyance roller pair disposed downstream of the feeding section in the conveyance direction, in which the second feeding roller is disposed at the other side of the first feeding roller, the third sensor is disposed at the other side of the second sensor, with respect to a first virtual line connecting an end portion at the one side of the nip position of the first feeding roller and an end portion at the other side of a nip position of the conveyance roller pair, the first sensor and the third sensor are disposed on the first virtual line or upstream in the conveyance direction of the first virtual line, and with respect to a second virtual line connecting an end portion at the other side of the nip position of the second feeding roller and an end portion at the one side of a nip position of the conveyance roller pair, the first sensor and the second sensor are disposed on the second virtual line or upstream in the conveyance direction of the second virtual line.

According to the present aspect, the second feeding roller is disposed at the other side of the first feeding roller, the third sensor is disposed at the other side of the second sensor, with respect to a first virtual line connecting an end portion at the one side of the nip position of the first feeding roller and an end portion at the other side of a nip position of the conveyance roller pair, the first sensor and the third sensor are disposed on the first virtual line or upstream in the conveyance direction of the first virtual line, and with respect to a second virtual line connecting an end portion at the other side of the nip position of the second feeding roller and an end portion at the one side of a nip position of the conveyance roller pair, the first sensor and the second sensor are disposed on the second virtual line or upstream in the conveyance direction of the second virtual line. Since such a configuration is adopted, it is possible to detect the skew before the medium is nipped by the conveyance roller pair.

The medium conveyance apparatus according to a ninth aspect of the present disclosure is an aspect according to any one of the fifth to seventh aspects, in which the second feeding roller is disposed at the other side of the first feeding roller, the third sensor is disposed at the other side of the second sensor, with respect to a third virtual line connecting an end portion at the one side of the nip position of the first feeding roller and the first sensor, the third sensor is disposed on the third virtual line or upstream in the conveyance direction of the third virtual line, and with respect to a fourth virtual line connecting an end portion at the other side of the nip position of the second feeding roller and the first sensor, the second sensor is disposed on the fourth virtual line or upstream in the conveyance direction of the fourth virtual line.

According to the present aspect, the second feeding roller is disposed at the other side of the first feeding roller, the third sensor is disposed at the other side of the second sensor, with respect to a third virtual line connecting an end portion at the one side of the nip position of the first feeding roller and the first sensor, the third sensor is disposed on the third virtual line or upstream in the conveyance direction of the third virtual line, and with respect to a fourth virtual line connecting an end portion at the other side of the nip position of the second feeding roller and the first sensor, the second sensor is disposed on the fourth virtual line or upstream in the conveyance direction of the fourth virtual line. Since such a configuration is adopted, it is possible to detect the skew before the medium is nipped by the conveyance roller pair.

The medium conveyance apparatus according to a tenth aspect of the present disclosure is an aspect according to any one of the fifth to ninth aspects described above, in which the controller calculates a skew amount from a time difference between when the medium passes through the first sensor and the second sensor or when the medium passes through the first sensor and the third sensor, or a difference in driving amount between the first feeding roller and the second feeding roller, and adjusts a rotation speed of each of the first feeding roller and the second feeding roller in accordance with the skew amount calculated.

According to the present aspect, a skew amount is calculated from a time difference between when the medium passes through the first sensor and when the medium passes through the second sensor or the third sensor, or a difference in driving amount between the first feeding roller and the second feeding roller, and a rotation speed of each of the first feeding roller and the second feeding roller is adjusted in accordance with the skew amount calculated. By adopting such a configuration, it is possible to preferably correct the skew.

An image reading apparatus according to an eleventh aspect of the present disclosure includes the medium conveyance apparatus of any one of the first to tenth aspects described above, and a reading section configured to read an image on the medium.

According to the present aspect, it is possible to read the image on the medium subjected to the skew correction with high accuracy.

The image reading apparatus according to a twelfth aspect of the present disclosure is an aspect according to the eleventh aspect described above, in which the reading section is disposed downstream of the detection section in the conveyance direction, and the controller calculates a skew amount from image data read by the reading section and adjusts a rotation speed of each of the first feeding roller and the second feeding roller in accordance with the skew amount calculated.

According to the present aspect, the skew amount is calculated from the image data read by the reading section and, the rotation speed of each of the first feeding roller and the second feeding roller is adjusted in accordance with the skew amount thus calculated. By adopting such a configuration, it is possible to read the image on the medium subjected to the skew correction with particularly high accuracy with feedback control.

### Example 1

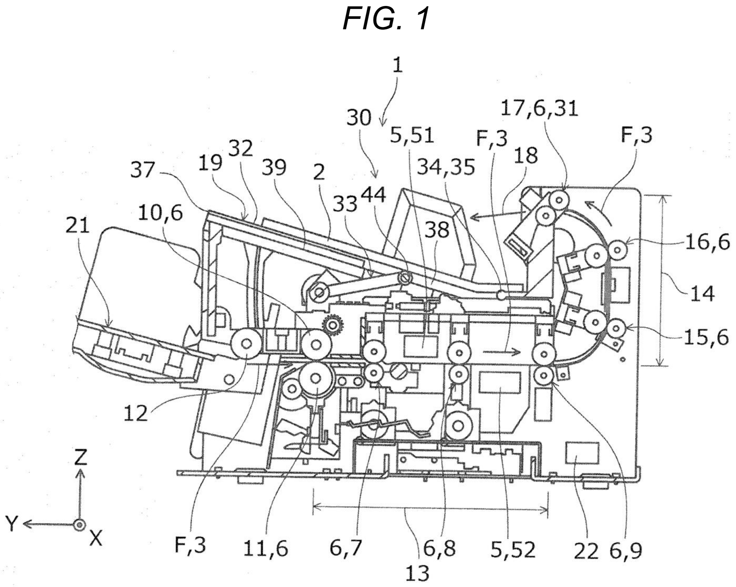

An embodiment of an image reading apparatus 1 as an example of the medium conveyance apparatus according to the present disclosure will hereinafter be described with reference to FIGS. 1 to 10. First, an outline of the image reading apparatus 1 according to Example 1 of the present disclosure will be described with reference to FIG. 1. In the following description, three axes orthogonal to each other are respectively defined as an X axis, a Y axis, and a Z axis as illustrated in the drawings. Directions indicated by arrows of the three axes (X, Y, and Z) are positive (+) directions in the respective directions, and opposite directions thereof are negative (-) directions. A Z-axis direction corresponds to a vertical direction, that is, a direction in which the gravity acts, a +Z direction represents a vertically upward direction and a -Z direction represents a vertically downward direction. An X-axis direction and a Y-axis direction correspond to a horizontal direction, and among these, the X-axis direction corresponds to a width direction. A +Y direction represents a frontward direction of the apparatus, and a -Y direction represents a rearward direction of the apparatus. A +X direction represents a rightward direction of the apparatus, and a -X direction represents a leftward direction of the apparatus.

The image reading apparatus 1 of the present example is a document scanner capable of reading an image formed on a medium 2. Here, the image formed on the medium 2 means an image visually recorded on the medium 2, and is, for example, a character, a figure, a table, a picture, or a photograph. The medium described above is not limited to a sheet, and includes a card, a booklet, and the like. The image reading apparatus 1 of the present disclosure is not limited to a scanner, and may be a copier, a facsimile machine, or the like.

As illustrated in FIG. 1, the image reading apparatus 1 can be regarded as a medium conveyance apparatus that conveys a medium 2 in a conveyance direction F along a conveyance path 3, and includes a reading section 5 that reads an image on the medium 2 thus conveyed. The image reading apparatus 1 includes a first reading unit 51 and a second reading unit 52 as a reading section 5 that reads the image on the medium 2. The first reading unit 51 is located above the conveyance path 3 to read the image on a first surface of the medium 2. The second reading unit 52 is located below the conveyance path 3 to read the image on a second surface opposite to the first surface. The reading section 5 includes, for example, a sensor of a contact image sensor (CIS) type or a sensor of a charge coupled device (CCD) type.

The image reading apparatus 1 includes a conveyance section 6 that conveys the medium 2 in the conveyance direction F along the conveyance path 3. The image reading apparatus 1 includes, as the conveyance section 6, a first conveyance roller pair 7 disposed upstream of the first reading unit 51, a second conveyance roller pair 8 disposed upstream of the second reading unit 52 located downstream of the first reading unit 51, and a third conveyance roller pair 9 disposed downstream of the second reading unit 52. The first conveyance roller pair 7, the second conveyance roller pair 8, and the third conveyance roller pair 9 are each configured with a pair of a driven roller and a driving roller that rotates with power of a driving source such as a motor (not illustrated).

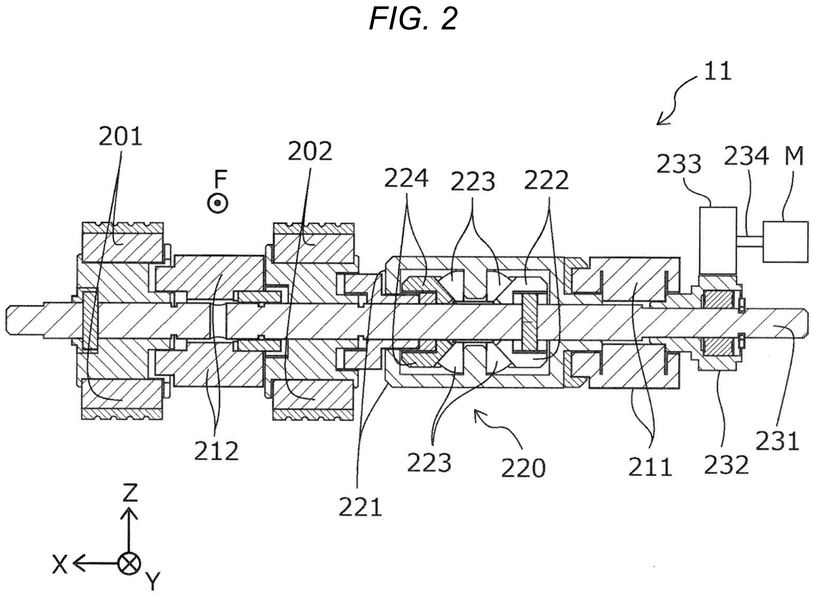

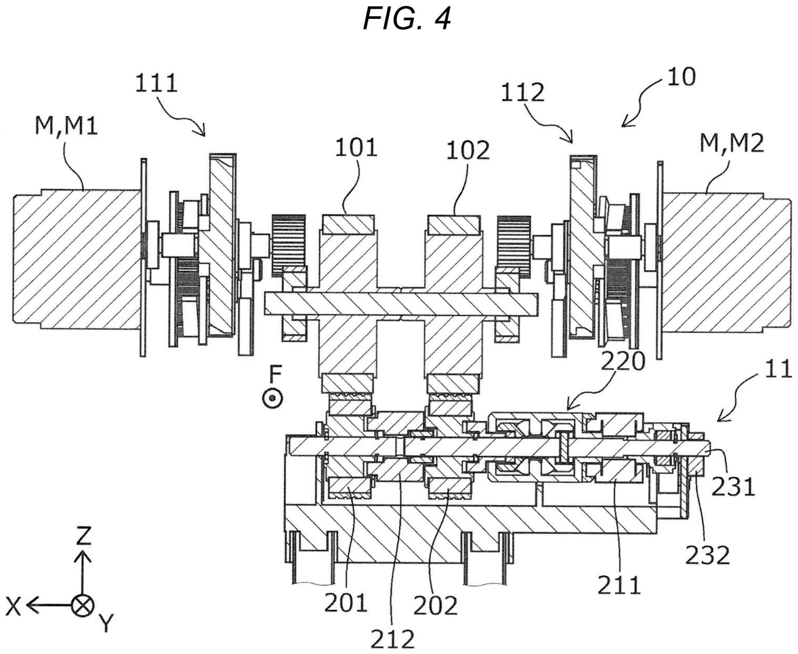

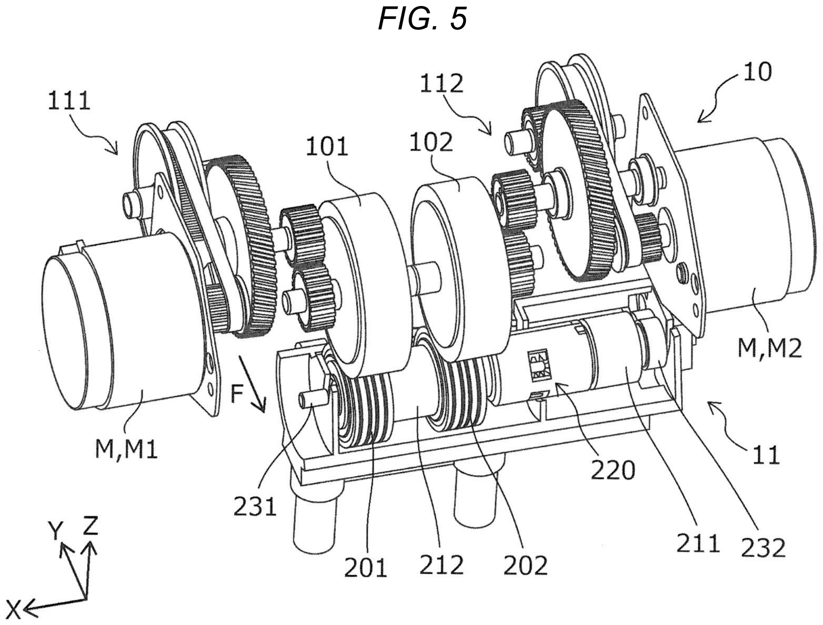

A feeding section 10 and a separation section 11, which will be described in detail later, are disposed upstream in the conveyance direction F of the first conveyance roller pair 7. The feeding section 10 includes two feeding rollers that rotate with power of a motor M illustrated in FIGS. 4 and 5 as a driving source, and conveys the medium 2 toward the conveyance direction F. The separation section 11 includes a torque limiter, and includes two separation rollers that rotate with power of a motor M illustrated in FIG. 2 as a driving source, and can separate one sheet of medium from two or more sheets of medium 2. Here, each separation roller rotates in a direction in which the medium 2 is fed upstream (toward the +Y direction) in the conveyance direction F with the power of the motor M, but when torque exceeding a preset value is applied to the torque limiter, the separation roller is driven to rotate in a direction in which the medium 2 is fed downstream (toward the -Y direction) in the conveyance direction F. A pick roller 12 is disposed upstream in the conveyance direction F of the separation section 11. The pick roller 12 is a driving roller that rotates with power of a driving source (not illustrated), and picks the medium 2 to feed the medium 2 toward the conveyance direction F.

In the image reading apparatus 1, a U-turn path 14 is disposed downstream of a straight path 13 extending from the feeding section 10 to the third conveyance roller pair 9, that is, downstream of the third conveyance roller pair 9. In the U-turn path 14, a fourth conveyance roller pair 15, a fifth conveyance roller pair 16, and a discharge roller pair 17 as the conveyance section 6 are disposed in this order along the conveyance direction F. The fourth conveyance roller pair 15, the fifth conveyance roller pair 16, and the discharge roller pair 17 are each also configured with a pair of a driven roller and a driving roller that rotates with power of a driving source (not illustrated). A discharge tray 19 that catches the medium 2 discharged from the discharge roller pair 17 in a discharge direction 18 is disposed above the straight path 13 to achieve a compact arrangement.

The medium 2 on a feeding tray 21 is picked by the pick roller 12 to be fed in the conveyance direction F. The feeding tray 21 is configured to move up and down with power of a driving source (not illustrated). When the medium 2 set in the feeding tray 21 is fed in the conveyance direction F, first, the feeding tray 21 is moved upward (+Z direction) with the power transmitted from the driving source (not illustrated), and then stops in a state where the medium 2 located at the top comes into contact with the pick roller 12. When the pick roller 12 rotates in this state, the medium 2 is fed in the conveyance direction F, and the leading end of the medium 2 reaches a nip position of the roller pair in the feeding section 10 and the separation section 11.

In the case of a double-feeding state in which two or more sheets of medium 2 are fed in an overlapped manner, one of the sheets is separated therefrom by the separation section 11, the one sheet is conveyed in the conveyance direction F by the first conveyance roller pair 7, and reading of the image on the first surface of the medium 2 is performed by the first reading unit 51. The medium 2 on which reading has been performed by the first reading unit 51 is conveyed by the second conveyance roller pair 8, and the second reading unit 52 performs reading of the image on the second surface opposite to the first surface of the medium 2.

A controller 22 controls driving of each driving source and the reading operation of the reading section 5 in accordance with the conveyance of the medium 2. The controller 22 includes a CPU, a ROM, a RAM, and so on (all not shown). The CPU performs various types of arithmetic processing in accordance with programs stored in the ROM to control an overall operation of the image reading apparatus 1. As the ROM which is an example of a storage device, a flash ROM which is a readable and writable nonvolatile memory can be preferably used. The RAM which is an example of the storage device temporarily stores various types of information.

The image reading apparatus 1 includes a medium discharge device 30. The medium discharge device 30 includes the discharge roller pair 17 as a discharge section 31 that discharges the medium 2, and the discharge tray 19 having a mounting surface 32 on which the medium 2 discharged from the discharge section 31 in the discharge direction 18 is mounted. The discharge tray 19 is configured to be extendable in a direction along the mounting surface 32. That is, the discharge tray 19 is configured to extend the length of the mounting surface 32. Further, the medium discharge device 30 includes an expansion changing section 33 that expands and contracts the discharge tray 19. The expansion changing section 33 is configured to expand and contract the discharge tray 19 in accordance with the size of the medium 2.

In the present embodiment, the discharge tray 19 is configured to be rotatable in an up-down direction with the base end portion 34 as a pivot 35. That is, the discharge tray 19 has a structure in which the user can rotate the discharge tray 19 by lifting a tip portion 37 upward. The discharge tray 19 includes a base tray 38 and an auxiliary tray 39 that is movable along an expansion direction with respect to the base tray 38. A protrusion is disposed in a base end of the auxiliary tray 39. The protrusion is a plate-like member protruding downward from the auxiliary tray 39.

The expansion changing section 33 is configured to extend the discharge tray 19 in conjunction with the rotation of the discharge tray 19. When the tip portion 37 of the discharge tray 19 rotates up and down with the base end portion 34 as the pivot 35, the discharge tray 19 slides along the expansion direction which is a direction along the mounting surface 32 in a state in which the other end portion 44 is coupled to the base tray 38.

The feeding section 10 and the separation section 11 will hereinafter be described in detail with reference to FIGS. 2 to 5. Here, the image reading apparatus 1 of the present example can be regarded as a medium conveyance apparatus including the feeding section 10 that feeds the medium 2 downstream, in the conveyance direction F, of the medium 2 and the separation section 11 that separates the medium 2 fed in the double-feeding state in cooperation with the feeding section 10.

As illustrated in FIG. 4 and so on, the feeding section 10 includes a first feeding roller 101 and a second feeding roller 102 which are provided at an interval in a width direction (X-axis direction) crossing the conveyance direction F in which the second feeding roller 102 rotates together with the first feeding roller 101. Further, as illustrated in FIGS. 2 to 5, the separation section 11 includes a first torque limiter 211. Further, a first separation roller 201 and a second separation roller 202 are provided in which first separation roller 201 is disposed to face the first feeding roller 101 and can rotate together with the first feeding roller 101 when torque larger than a first torque value derived from a limit torque value of the first torque limiter 211 is applied, and the second separation roller 202 is disposed to face the second feeding roller 102 and is capable of both rotating together with the first separation roller 201 and rotating independently of the first separation roller 201.

Specifically, when defining the limit torque value of the first torque limiter 211 as T, the "first torque value derived from the limit torque value of the first torque limiter 211" applied to the first separation roller 201 is 0.5T. This is because, as illustrated in FIG. 2 and so on, the first torque limiter 211 is coupled to each of the first separation roller 201 and the second separation roller 202, and the torque applied to the first torque limiter 211 is a sum of the torque of the first separation roller 201 and the torque of the second separation roller 202. For example, when the torque of 0.5T which is the first torque value is applied to the first separation roller 201, the torque of 0.5T is applied to the first torque limiter 211 from each of the first separation roller 201 and the second separation roller 202. That is, the "first torque value derived from the limit torque value of the first torque limiter 211" corresponds to a torque value of the first separation roller 201 when the limit torque value is applied to the first torque limiter 211.

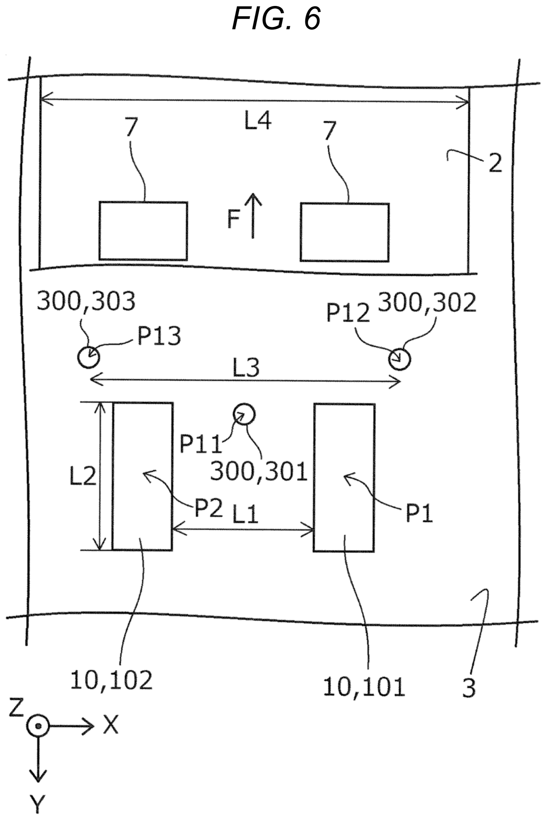

Here, as illustrated in FIGS. 6 to 9, the image reading apparatus 1 of the present example includes a detection section 300 that detects the skew of the medium 2 fed from the feeding section 10. Then, the controller 22 can rotate the first feeding roller 101 and the second feeding roller 102 while adjusting a rotation speed of each of the first feeding roller 101 and the second feeding roller 102 based on the skew state of the medium 2 detected by the detection section 300.

Further, as illustrated in FIG. 2 and so on, the separation section 11 includes a second torque limiter 212 that couples the first separation roller 201 and the second separation roller 202 in the width direction (X-axis direction). The limit torque value of the second torque limiter 212 is a second torque value lower than the first torque value. That is, the first torque limiter 211 defines the overall torque of the first separation roller 201 and the second separation roller 202. In other words, it is defined whether to co-rotate with the first feeding roller 101 and the second feeding roller 102. Meanwhile, the second torque limiter 212 defines whether to rotate the first separation roller 201 and the second separation roller 202 integrally or separately.

Here, the second torque value is a value larger than a torque difference between the torque applied to the first separation roller 201 and the torque applied to the second separation roller 202, which is generated when there is no difference in rotation speed between the first feeding roller 101 and the second feeding roller 102, and the second torque value is a value smaller than a torque difference between the torque applied to the first separation roller 201 and the torque applied to the second separation roller 202, which is generated when there is a difference in rotation speed between the first feeding roller 101 and the second feeding roller 102.

As described above, in the image reading apparatus 1 of the present example, since the second torque value as the limit torque value of the second torque limiter 212 is smaller than the first torque value derived from the limit torque value of the first torque limiter 211, it is possible to sufficiently exert the separation function of the media 2 fed in the double-feeding state. In addition, since the second torque value is a value larger than the torque difference between the first separation roller 201 and the second separation roller 202 which is generated when there is no difference in rotation speed between the first feeding roller 101 and the second feeding roller 102, the conveyance straightness is improved due to the binding force by the second torque value. Further, since the second torque value is a value smaller than the torque difference between the first separation roller 201 and the second separation roller 202 which is generated when there is a difference in rotation speed between the first feeding roller 101 and the second feeding roller 102, followability of the first separation roller 201 and the second separation roller 202 due to the rotation of the first feeding roller 101 and the second feeding roller 102 is enhanced, and thus it is possible to suppress the skew. Therefore, the image reading apparatus 1 according to the present example can improve the skew correction performance without deteriorating a performance of conveying the medium 2.

In another expression, by using the second torque limiter 212 between the first separation roller 201 and the second separation roller 202, the torque generated in the first separation roller 201 and the second separation roller 202 is equal to or less than the second torque value when the medium 2 is traveling straight without skewing, and therefore, the first separation roller 201 and the second separation roller 202 rotate integrally. Then, when the medium 2 travels with a skew and the skew is corrected, since the torque generated in the first separation roller 201 and the second separation roller 202 exceeds the second torque value, the first separation roller 201 and the second separation roller 202 located at the left and right sides can rotate independently. That is, the skew correction capability can be improved without impairing the straightness.

As illustrated in FIGS. 2 to 5, the separation section 11 includes a differential gear 220 that couples the first separation roller 201 and the second separation roller 202. Due to such a configuration, the image reading apparatus 1 of the present example can independently rotate the first separation roller 201 and the second separation roller 202 without complicating the apparatus configuration. Therefore, a skew correction capability when independently driving the first feeding roller 101 and the second feeding roller 102 is improved. In addition, by using the differential gear 220, the loads of the counterclockwise skew correction and the clockwise skew correction become the same, and thus it is possible to eliminate a bilateral difference.

Here, as illustrated in FIG. 2, the first separation roller 201 is fixed to a rotary shaft 231. A gear 232 that meshes with a gear 233 provided on a rotary shaft 234 of the motor M is fixed to the rotary shaft 231, and the first separation roller 201 rotates as the rotary shaft 234 of the motor M rotates. However, since the first separation roller 201 is coupled to the first torque limiter 211, when force larger in value than the first torque value is applied from the first feeding roller 101, a co-rotation with the first feeding roller 101 occurs.

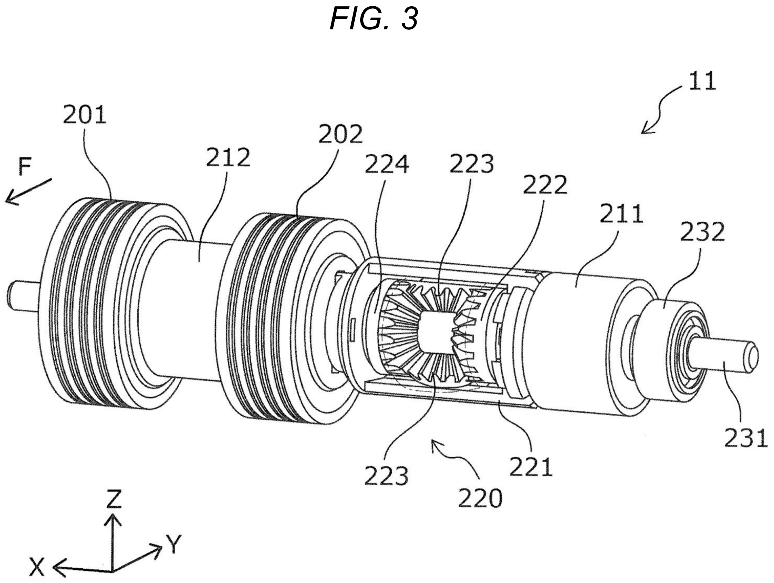

As illustrated in FIGS. 2 and 3 and so on, the differential gear 220 includes a case 221, a conical gear 222, a pinion gear 223, and a conical gear 224, in which the case 221 is coupled to the first torque limiter 211, the conical gear 222 is fixed to the rotary shaft 231 of the first separation roller 201 and the second separation roller 202, the pinion gear 223 meshes with the conical gear 222, and the conical gear 224 meshes with the pinion gear 223 and is fixed to the second separation roller 202. Further, the first separation roller 201 and the second separation roller 202 are both coupled to the second torque limiter 212.

In the description from another viewpoint, the separation section 11 is configured such that the left and right separation rollers (the first separation roller 201 and the second separation roller 202) can be independently rotated when viewed from the conveyance direction F using the differential gear 220. Further, drive of the first separation roller 201 is coupled to drive of the conical gear 222 having bevel teeth rotatable around the rotary shaft 231, and drive of the second separation roller 202 is coupled to drive of the conical gear 224 having bevel teeth rotatable around the rotary shaft 231. The conical gear 222 and the conical gear 224 are both coupled with the pinion gear 223 having bevel teeth, the pinion gear 223 is rotatable about an axis orthogonal to the rotary shaft 231, and a rotary shaft of the pinion gear 223 is held by the case 221 rotatable in the rotation direction of the rotary shaft 231. Further, the case 221 is coupled to the first torque limiter 211 to thereby generate separation force in the separation section 11.

The left and right separation rollers (the first separation roller 201 and the second separation roller 202) viewed from the conveyance direction F are coupled to each other with the second torque limiter 212. The second torque value as the limit torque value of the second torque limiter 212 is a value smaller than the first torque value. Further, the second torque value is set to a value larger than the torque difference between the left and right separation rollers generated when there is no difference in rotation speed between the left and right feeding rollers (the first feeding roller 101 and the second feeding roller 102), and is set to a value smaller than the torque difference between the left and right separation rollers generated when there is a difference in rotation speed between the left and right feeding rollers.

By using the differential gear 220 in the separation section 11, the loads of the counterclockwise skew correction and the clockwise skew correction are the same, and therefore, the accuracy of the skew correction by the left and right separation rollers can be improved. Further, as said before, by using the second torque limiter 212 between the separation rollers, when the medium 2 is conveyed straight along the conveyance direction F, the torque generated in the left and right separation rollers is equal to or less than the second torque value, and thus the left and right separation rollers integrally rotate. In contrast, when the skew correction is performed when the skew occurs due to the conveyance of the medium 2 being inclined with respect to the conveyance direction F, the torque generated in the left and right separation rollers exceeds the second torque value, and thus the left and right separation rollers independently rotate as a result. That is, by using the differential gear 220 in the separation section 11, the skew correction capability can be improved without impairing the straightness.

Further, in the separation section 11, the first torque limiter 211 is coupled to the first separation roller 201, and the second separation roller 202 is also coupled to the first torque limiter 211 in an individual connection path via the differential gear 220. In another expression, a torque value obtained by equally dividing the torque value applied to the first torque limiter 211 is applied to each of the first separation roller 201 and the second separation roller 202. Due to such a configuration, the image reading apparatus 1 of the present example can independently rotate the first separation roller 201 and the second separation roller 202 without complicating the apparatus configuration.

As illustrated in FIGS. 4 and 5, the image reading apparatus 1 according to the example includes, as the motor M, a first driving source M1 that drives the first feeding roller 101 via a gear train 111 and a second driving source M2 that drives the second feeding roller 102 via a gear train 112. In this manner, by driving the first feeding roller 101 and the second feeding roller 102 by the individual driving sources (motors M), it is possible to easily control the skew correction.

Then, a specific arrangement of the detection section 300 that detects the skew correction of the medium 2 will be described with reference to FIGS. 6 to 9. As illustrated in FIGS. 6 to 9, the image reading apparatus 1 according to the present example includes, as the detection section 300, a first sensor 301, a second sensor 302, and a third sensor 303. The first sensor 301, the second sensor 302, and the third sensor 303 are disposed at intervals in the width direction (X-axis direction).

Here, as illustrated in FIG. 6, the first sensor 301 is disposed at a position P11 downstream of a position P1 which is a nip position of the first feeding roller 101 and the first separation roller 201, and a position P2 which is a nip position of the second feeding roller 102 and the second separation roller 202 in the conveyance direction F. In addition, the first sensor 301 is disposed at the position P11 in a range of an area L1 between the first feeding roller 101 and the second feeding roller 102 in the X-axis direction, and is disposed at the position P11 located in a range L2 which overlaps the first feeding roller 101 and the second feeding roller 102 in the X-axis direction. Meanwhile, the second sensor 302 is disposed at a position P12 at one side (+X direction side) of the first sensor 301 in the X-axis direction, and the third sensor 303 is disposed at a position P13 at the other side (-X direction side) of the first sensor 301 in the X-axis direction.

By adopting such a configuration, it is possible to suppress adhesion of foreign matter such as paper dust from the medium 2 thus conveyed to the first sensor 301, and it is possible to suppress a decrease in skew detection accuracy. In addition, it is possible to advance the timing of the skew detection by the first sensor 301 and it is possible to promptly perform the skew correction. Therefore, the image reading apparatus 1 according to the present example can improve the skew correction performance without deteriorating a performance of conveying the medium 2. Note that although the skew can be detected without the first sensor 301 as long as the second sensor 302 and the third sensor 303 are provided, the skew can be detected at an early stage due to the presence of the first sensor 301.

Further, in the image reading apparatus 1 according to the present example, as illustrated in FIGS. 6 to 9, the second sensor 302 and the third sensor 303 are disposed at the position P12 and the position P13 downstream of the first sensor 301 in the conveyance direction F. Since such a configuration is adopted, the image reading apparatus 1 of the present example can execute the detection of the skew with the first sensor 301 at an early timing, and can accurately detect the skew by combining the detection with the second sensor 302 and the detection with the third sensor 303 with each other.

Further, in the image reading apparatus 1 according to the present example, as illustrated in FIG. 6, a distance L3 between the second sensor 302 and the third sensor 303 in the width direction (X-axis direction) is narrower than a minimum available width L4 of the medium 2. Since such a configuration is adopted, the image reading apparatus 1 of the present example can reliably detect the skew even when the medium 2 having the minimum available width is skewed. Note that the distance L3 between the second sensor 302 and the third sensor 303 is preferably smaller than, for example, 51 mm. However, the distance L3 between the second sensor 302 and the third sensor 303 in the width direction (X-axis direction) is not particularly limited, and for example, the distance L3 may be disposed inside an area in the width direction (X-axis direction) between the first feeding roller 101 and the second feeding roller 102, or may be disposed outside that area.

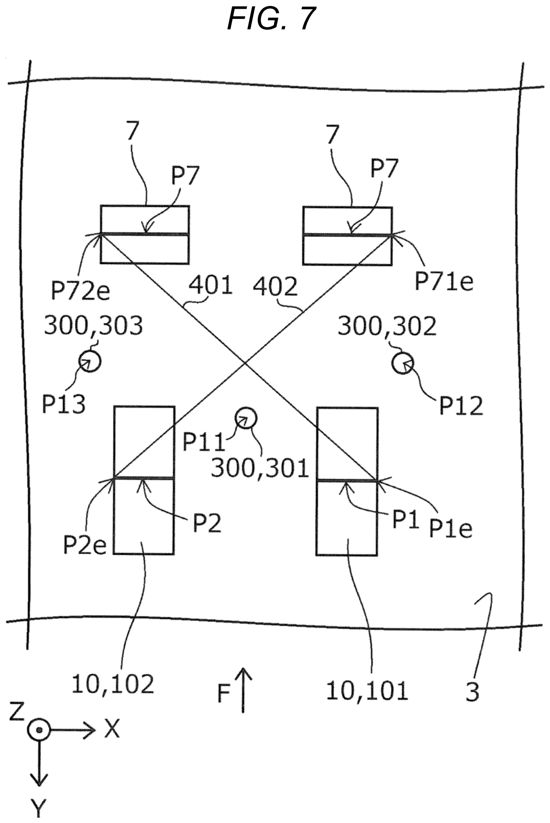

As described above, the image reading apparatus 1 of the present example includes the first conveyance roller pair 7 disposed downstream of the feeding section 10 in the conveyance direction F. Here, as illustrated in FIG. 7, the second feeding roller 102 is disposed at the other side (-X direction side) of the first feeding roller 101, and the third sensor 303 is disposed at the other side (-X direction side) of the second sensor 302. Further, with respect to a first virtual line 401 connecting an end portion P1e at one side (+X direction side) of the position P1 which is the nip position of the first feeding roller 101 and an end portion P72e at the other side (-X direction side) of a position P7 which is a nip position of the first conveyance roller pair 7, the first sensor 301 and the third sensor 303 are disposed on the first virtual line 401 or upstream in the conveyance direction F of the first virtual line 401. Further, with respect to a second virtual line 402 connecting an end portion P2e at the other side (-X direction side) of the position P2 which is the nip position of the second feeding roller 102 and an end portion P71e at one side (+X direction side) of a position P7 which is a nip position of the first conveyance roller pair 7, the first sensor 301 and the second sensor 302 are disposed on the second virtual line 402 or upstream in the conveyance direction F of the second virtual line 402. Since such a configuration is adopted, the image reading apparatus 1 of the present example can detect the skew before the medium 2 is nipped by the first conveyance roller pair 7.

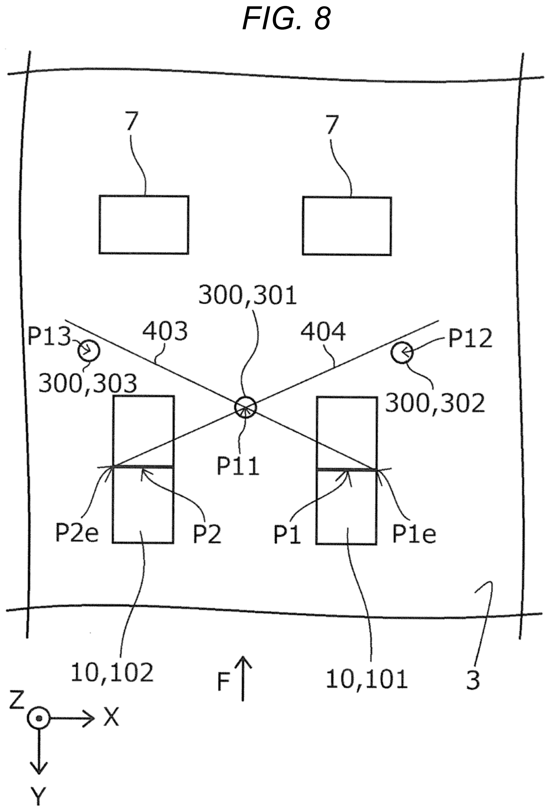

As described above, in the image reading apparatus 1 of the present example, the second feeding roller 102 is disposed at the other side (-X direction side) of the first feeding roller 101. Further, the third sensor 303 is disposed at the other side (-X direction side) of the second sensor 302. Here, as illustrated in FIG. 8, with respect to a third virtual line 403 connecting the end portion P1e at one side (+X direction side) of the position P1 which is the nip position of the first feeding roller 101 and the position P11 of the first sensor 301, the position P13 of the third sensor 303 is disposed on the third virtual line 403 or upstream in the conveyance direction F of the third virtual line 403. Further, with respect to a fourth virtual line 404 connecting the end portion P2e at the other side (-X direction side) of the position P2 which is the nip position of the second feeding roller 102 and the position P11 of the first sensor 301, the position P12 of the second sensor 302 is disposed on the fourth virtual line 404 or upstream in the conveyance direction F of the fourth virtual line 404. Since such a configuration is adopted, the image reading apparatus 1 of the present example can detect the skew before the medium 2 is nipped by the first conveyance roller pair 7. Note that in the image reading apparatus 1 of the present example, there is adopted a configuration in which the third virtual line 403 and the fourth virtual line 404 are not in contact with the first conveyance roller pair 7.

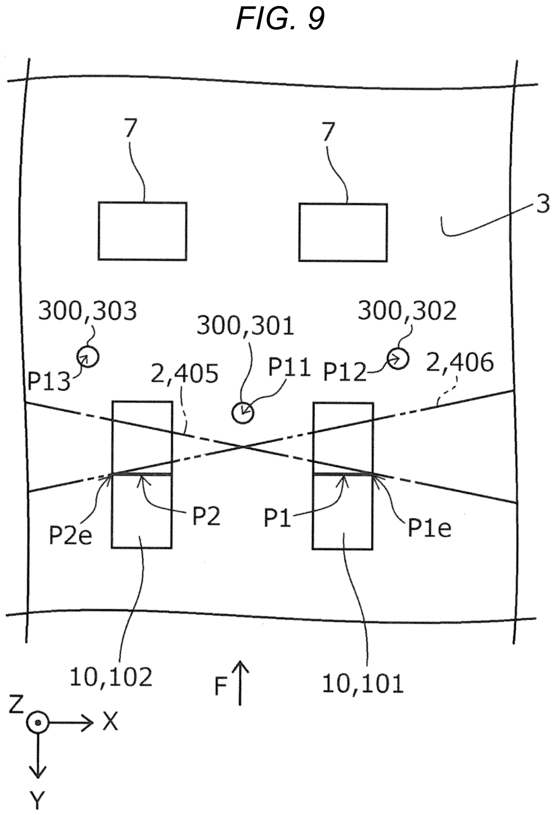

Further, as illustrated in FIG. 9, in the image reading apparatus 1 according to the present example, the position P11 of the first sensor 301 is disposed downstream, in the conveyance direction F, of a fifth virtual line 405 having a maximum skew angle (e.g., 30° with respect to the X axis) extending from the end portion P1e at one side (+X direction side) of the position P1 which is the nip position of the first feeding roller 101. Similarly, the position P11 of the first sensor 301 is disposed downstream, in the conveyance direction F, of a sixth virtual line 406 that extends from the end portion P2e at the other side (-X direction side) of the position P2, which is the nip position of the second feeding roller 102, and has an angle that allows the maximum skew. Since such a configuration is adopted, it is possible to detect the skew before the medium 2 is nipped by the first conveyance roller pair 7. In addition, it is possible to correct the skew in a state where the medium 2 is reliably nipped by the first feeding roller 101 and the second feeding roller 102 over the entire width direction (X-axis direction). Note that the maximum skew angle corresponds to the angle at which, if skewing occurs beyond it, medium 2 may present a risk of jamming or similar issues.

Here, in the image reading apparatus 1 of the present example, the controller 22 can calculate the skew amount from a time difference between when the medium 2 passes through the first sensor 301 and when the medium 2 passes through the second sensor 302 or the third sensor 303, and adjust the rotation speed of each of the first feeding roller 101 and the second feeding roller 102 in accordance with the skew amount thus calculated. Further, the controller 22 can calculate the skew amount from a difference in driving amount between the first feeding roller 101 and the second feeding roller 102, and adjust the rotation speed of each of the first feeding roller 101 and the second feeding roller 102 in accordance with the skew amount thus calculated. Therefore, the image reading apparatus 1 of the present example can suitably correct the skew. Note that the image reading apparatus 1 according to the present example includes an encoder (not illustrated) capable of measuring the rotation amounts of the motors M (the first driving source M1 and the second driving source M2) which are the driving sections of the first feeding roller 101 and the second feeding roller 102. Then, the controller 22 can calculate the difference in driving amount between the first feeding roller 101 and the second feeding roller 102 from the measurement result by the encoder.

Note that the image reading apparatus 1 according to the present example can be expressed as including the medium conveyance apparatus having such a configuration as described above and the reading section 5 that reads an image on the medium 2. Therefore, the image reading apparatus 1 of the present example can read the image on the medium 2 subjected to the skew correction with high accuracy.

Here, the reading section 5 is disposed downstream of the detection section 300 in the conveyance direction F. Further, the controller 22 can also calculate the skew amount from the image data read by the reading section 5 and adjust the rotation speed of each of the first feeding roller 101 and the second feeding roller 102 in accordance with the skew amount thus calculated. Therefore, the image reading apparatus 1 of the present example can read the image on the medium 2 subjected to the skew correction with particularly high accuracy due to feedback control.

### Example 2

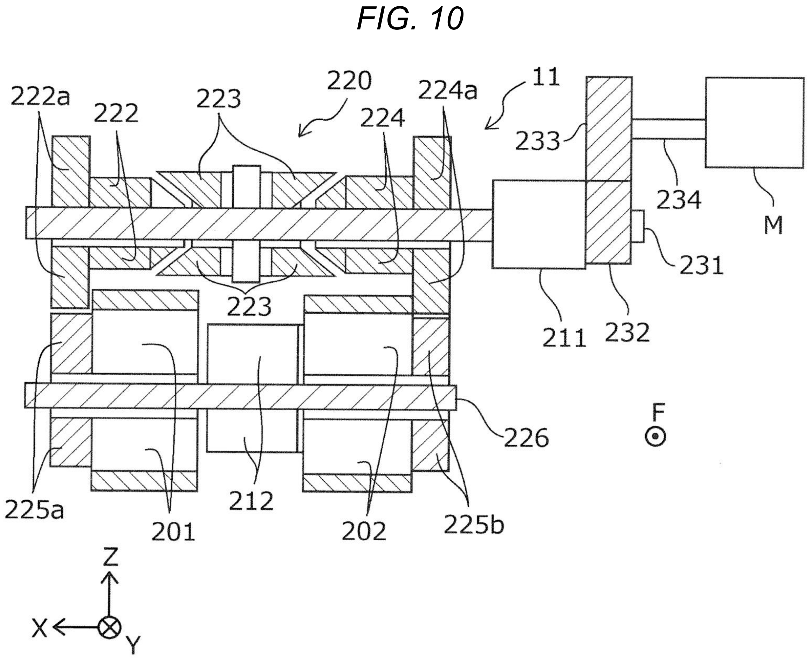

Then, an image reading apparatus 1 according to Example 2 will be described with reference to FIG. 10. In FIG. 10, the elements common to those in Example 1 described above are denoted by the same reference symbols to omit the detailed description thereof. Here, the image reading apparatus 1 of the present example has substantially the same configuration as that of the image reading apparatus 1 of Example 1 except the configuration of the separation section 11. Therefore, the image reading apparatus 1 of the present example has substantially the same features as those of the image reading apparatus 1 of Example 1 except the portions described below.

As described above, in the separation section 11 of the image reading apparatus 1 according to Example 1, the first torque limiter 211, the second torque limiter 212, the differential gear 220, the first separation roller 201, and the second separation roller 202 are configured to be rotatable about the same rotary shaft 231. In contrast, in the separation section 11 of the image reading apparatus 1 according to the present example, as illustrated in FIG. 10, the differential gear 220 is configured to be rotatable with reference to the rotary shaft 231 provided with the first torque limiter 211, but the first separation roller 201 and the second separation roller 202 are configured to be rotatable with reference to a rotary shaft 226 other than the rotary shaft 231.

Specifically, a gear 222a is fixed to the conical gear 222 of the differential gear 220, and a gear 224a is fixed to the conical gear 224 of the differential gear 220. In addition, a gear 225a which meshes with the gear 222a and is fixed to the first separation roller 201 is rotatable with reference to the rotary shaft 226, a gear 225b which meshes with the gear 224a and is fixed to the second separation roller 202 is rotatable with reference to the rotary shaft 226, and the first separation roller 201 and the second separation roller 202 are coupled to each other with the second torque limiter 212 which is provided to the rotary shaft 226. The separation section 11 having such a configuration also has substantially the same characteristics as those of the separation section 11 of the image reading apparatus 1 of Example 1.

### Example 3

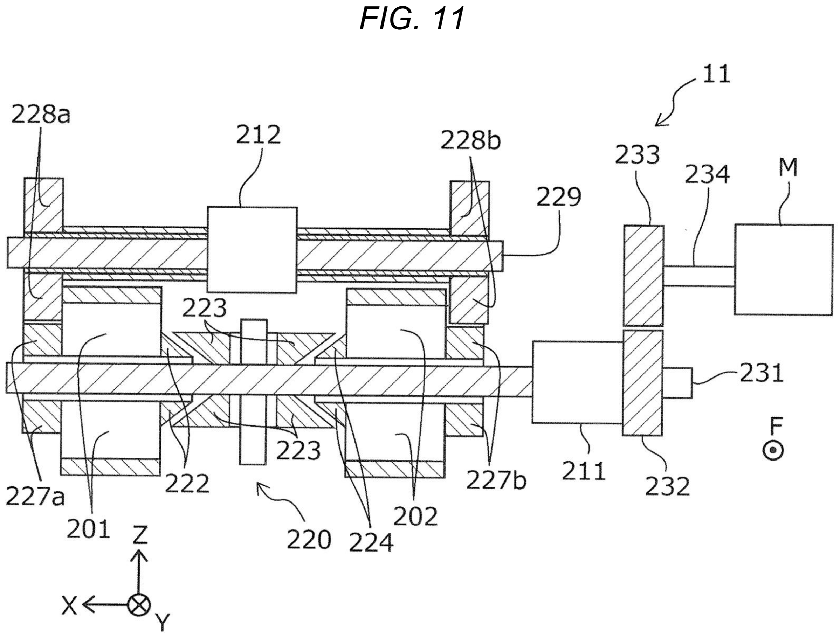

Then, an image reading apparatus 1 according to Example 3 will be described with reference to FIG. 11. In FIG. 11, components common to those in Examples 1 and 2 described above are denoted by the same reference numerals to omit the detailed descriptions thereof. Here, the image reading apparatus 1 of the present example has substantially the same configuration as that of the image reading apparatus 1 of Examples 1 and 2 except the configuration of the separation section 11. Therefore, the image reading apparatus 1 of the present example has substantially the same features as those of the image reading apparatus 1 of Examples 1 and 2 except the portions described below.

As described above, in the separation section 11 of the image reading apparatus 1 according to Example 1, the first torque limiter 211, the second torque limiter 212, the differential gear 220, the first separation roller 201, and the second separation roller 202 are configured to be rotatable about the same rotary shaft 231. In contrast, as illustrated in FIG. 11, in the separation section 11 of the image reading apparatus 1 according to the present example, there is adopted a configuration in which the components except the second torque limiter 212 are rotatable with reference to the rotary shaft 231 provided with the first torque limiter 211, but the second torque limiter 212 is provided to a rotary shaft 229 other than the rotary shaft 231.

Specifically, the first separation roller 201 and the second separation roller 202 are not directly coupled to each other with the second torque limiter 212. Instead, a gear 227a fixed to the first separation roller 201 and rotatable with reference to the rotary shaft 231 meshes with a gear 228a provided to the rotary shaft 229, and a gear 227b fixed to the second separation roller 202 and rotatable with reference to the rotary shaft 231 meshes with a gear 228b provided to the rotary shaft 229. Due to such a configuration, the first separation roller 201 and the second separation roller 202 are indirectly coupled to each other with the second torque limiter 212. The separation section 11 having such a configuration also has substantially the same features as those of the separation section 11 of the image reading apparatus 1 according to Examples 1 and 2.

### Example 4

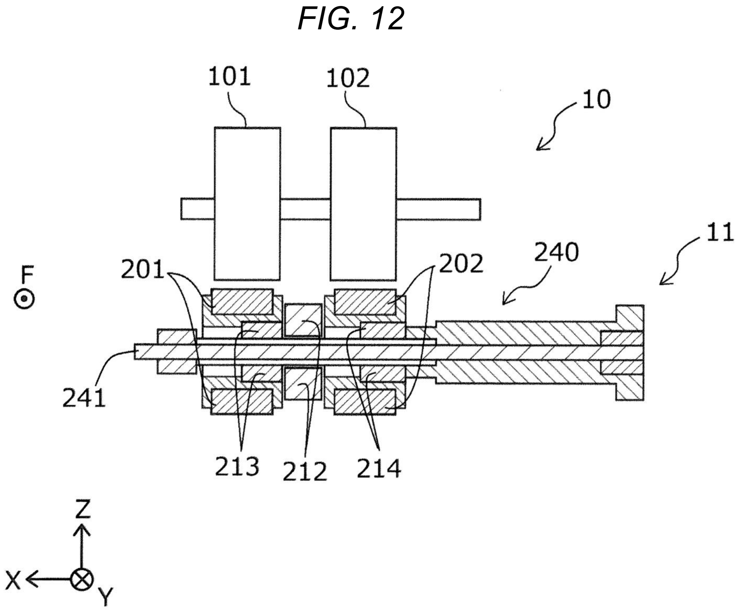

Then, an image reading apparatus 1 according to Example 4 will be described with reference to FIG. 12. In FIG. 12, components common to those in Examples 1 to 3 described above are denoted by the same reference numerals to omit the detailed description thereof. Here, the image reading apparatus 1 of the present example has substantially the same configuration as that of the image reading apparatus 1 of Examples 1 to 3 except the configuration of the separation section 11. Therefore, the image reading apparatus 1 of the present example has substantially the same features as those of the image reading apparatus 1 of Examples 1 to 3 except the portions described below.

As described above, the separation section 11 of the image reading apparatus 1 according to Examples 1 to 3 includes the differential gear 220. In contrast, as illustrated in FIG. 12, the separation section 11 of the image reading apparatus 1 of the present example includes a gear unit 240 separately from the differential gear 220. Further, the second torque limiter 212, a third torque limiter 213, a fourth torque limiter 214, the first separation roller 201, and the second separation roller 202 are provided to a rotary shaft 241 of the gear unit 240. Further, the third torque limiter 213 is coupled to the first separation roller 201, the fourth torque limiter 214 is coupled to the second separation roller 202, and when the limit torque value of the first torque limiter 211 in the separation section 11 of the image reading apparatus 1 according to Examples 1 to 3 is T, a limit torque value of each of the third torque limiter 213 and the fourth torque limiter 214 is 0.5T. That is, in the present example, a torque limiter having a limit torque value obtained by equally dividing the limit torque value of the first torque limiter 211 is coupled to each of the first separation roller 201 and the second separation roller 202. Further, the third torque limiter 213 and the fourth torque limiter 214 also serve as the first torque limiter 211. The separation section 11 having such a configuration also has substantially the same features as those of the separation section 11 of the image reading apparatus 1 according to Examples 1 to 3 except the features specific to the inclusion of the differential gear 220.

The present disclosure is not limited to the examples described above and can be implemented in various configurations without departing from the gist of the present disclosure. Further, in order to solve a part or all of the problems described above, or to achieve a part or all of the advantages described above, the technical features in the examples corresponding to the technical features in the respective aspects described in SUMMARY can be replaced or combined as appropriate. Further, any of the technical features can be eliminated as appropriate unless described as essential in the present specification.

## Claims

1. A medium conveyance apparatus comprising:
a feeding section configured to feed a medium downstream in a conveyance direction of the medium, the feeding section including a first feeding roller and a second feeding roller disposed at an interval in a width direction crossing the conveyance direction, and the second feeding roller rotating together with the first feeding roller;
a separation section that includes a first torque limiter, that is configured to separate the medium fed in a double-feeding state in cooperation with the feeding section,
that includes a first separation roller disposed so as to face the first feeding roller, and a second separation roller disposed so as to face the second feeding roller, in which the first separation roller and the second separation roller co-rotate when torque larger in value than a first torque value derived from a limit torque value of the first torque limiter is applied, and
in which the first separation roller and the second separation roller are configured to co-rotate and rotate independently of each other;
a detection section configured to detect skew of the medium fed from the feeding section; and
a controller configured to rotate the first feeding roller and the second feeding roller while adjusting rotation speeds of the first feeding roller and the second feeding roller based on a state of the skew of the medium detected by the detection section, wherein
the separation section includes a second torque limiter configured to couple the first separation roller and the second separation roller to each other in the width direction,
a limit torque value of the second torque limiter is a second torque value smaller than the first torque value,
the separation rollers rotate independently of each other when torque larger in value than a total torque value of the first torque value and the second torque value is applied to one of the first and second separation rollers, and
the second torque value is larger than a torque difference between torque applied to the first separation roller and torque applied to the second separation roller generated when there is no difference in rotation speed between the first feeding roller and the second feeding roller, and is smaller than a torque difference between torque applied to the first separation roller and torque applied to the second separation roller generated when there is a difference in rotation speed between the first feeding roller and the second feeding roller.

2. The medium conveyance apparatus according to claim 1, wherein
the separation section includes a differential gear that couples the first separation roller and the second separation roller to each other.

3. The medium conveyance apparatus according to claim 1, wherein
in the separation section, torque limiters having limit torque values obtained by equally dividing the limit torque value of the first torque limiter are coupled respectively to the first separation roller and the second separation roller.

4. The medium conveyance apparatus according to claim 1, further comprising:
a first driving source configured to drive the first feeding roller; and
a second driving source configured to drive the second feeding roller.

5. The medium conveyance apparatus according to claim 1, wherein
in the detection section, a first sensor, a second sensor, and a third sensor are disposed at intervals in the width direction,
the first sensor is disposed at a position that is downstream, in the conveyance direction, of a nip position of the first feeding roller and the first separation roller and a nip position of the second feeding roller and the second separation roller, and is between the first feeding roller and the second feeding roller in the width direction, and overlaps the first feeding roller and the second feeding roller in the width direction,
the second sensor is disposed at one side of the first sensor in the width direction, and
the third sensor is disposed at another side of the first sensor in the width direction.

6. The medium conveyance apparatus according to claim 5, wherein
the second sensor and the third sensor are disposed at positions downstream of the first sensor in the conveyance direction.

7. The medium conveyance apparatus according to claim 5, wherein
a distance in the width direction between the second sensor and the third sensor is narrower than a minimum available width of the medium.

8. The medium conveyance apparatus according to claim 5, further comprising
a conveyance roller pair disposed downstream of the feeding section in the conveyance direction, wherein
the second feeding roller is disposed at the other side of the first feeding roller,
the third sensor is disposed at the other side of the second sensor,
with respect to a first virtual line connecting an end portion at the one side of the nip position of the first feeding roller and an end portion at the other side of a nip position of the conveyance roller pair, the first sensor and the third sensor are disposed on the first virtual line or upstream in the conveyance direction of the first virtual line, and
with respect to a second virtual line connecting an end portion at the other side of the nip position of the second feeding roller and an end portion at the one side of a nip position of the conveyance roller pair, the first sensor and the second sensor are disposed on the second virtual line or upstream in the conveyance direction of the second virtual line.

9. The medium conveyance apparatus according to claim 5, wherein
the second feeding roller is disposed at the other side of the first feeding roller,
the third sensor is disposed at the other side of the second sensor,
with respect to a third virtual line connecting an end portion at the one side of the nip position of the first feeding roller and the first sensor, the third sensor is disposed on the third virtual line or upstream in the conveyance direction of the third virtual line, and
with respect to a fourth virtual line connecting an end portion at the other side of the nip position of the second feeding roller and the first sensor, the second sensor is disposed on the fourth virtual line or upstream in the conveyance direction of the fourth virtual line.

10. The medium conveyance apparatus according to claim 5, wherein
the controller calculates a skew amount from a time difference between when the medium passes through the first sensor and the second sensor or when the medium passes through the first sensor and the third sensor, or a difference in driving amount between the first feeding roller and the second feeding roller, and adjusts a rotation speed of each of the first feeding roller and the second feeding roller in accordance with the skew amount calculated.

11. An image reading apparatus comprising:
the medium conveyance apparatus according to claim 1; and
a reading section configured to read an image on the medium.

12. The image reading apparatus according to claim 11, wherein
the reading section is disposed downstream of the detection section in the conveyance direction, and
the controller calculates a skew amount from image data read by the reading section and adjusts a rotation speed of each of the first feeding roller and the second feeding roller in accordance with the skew amount calculated.
